# DEMANDE DE BREVET EUROPEEN

(11) **EP 4 834 646 A1**
(43) Date de publication de la demande: **04.11.2026**
(21) Numéro de dépôt: 26174658.0
(22) Date de dépôt: 27.04.2026
(51) Int. Cl.: B60L 50/61, B60L 58/13, B60L 58/14, B64D 27/351, B64D 27/357

(54) **PROCÉDÉ ET SYSTÈME DE GESTION D'UNE SOURCE D' ÉNERGIE ÉLECTRIQUE DANS UNE ARCHITECTURE DE PROPULSION HYBRIDE**

(30) Priorité: 28.04.2025 FR 2504462
(71) Demandeur: Airbus Operations (S.A.S.), 31300 Toulouse (FR)
(72) Inventeur: ALBERO, Franck, 31060 Toulouse (FR); DRISSI EL BOUZAIDI, lsrae, 31060 Toulouse (FR)
(74) Mandataire: Cabinet Le Guen Maillet

(57) **Abrégé**

Un procédé de gestion de l'énergie d'une source d'énergie électrique dans un aéronef présentant une architecture de propulsion hybride électrique, comprenant au moins un moteur thermique et ladite source. Le procédé comporte, pour une mission donnée : pendant une phase initiale (601), charger entièrement la source avec une quantité d'énergie répartie, d'une manière déterminée et pour toute la durée de la mission donnée, entre différentes réserves d'énergie, dont une réserve particulière pour les fonctions hybrides ; autoriser une utilisation de la réserve particulière pour l'exécution d'au moins une des fonctions hybrides, pendant au moins une des phases de roulage avant décollage (602) et de décollage (603) ; et recharger la source pendant une phase de croisière (605) afin que la réserve particulière permette l'exécution d'au moins une des fonctions hybrides pendant au moins une des phases de descente (606), d'atterrissage (607) et de roulage après atterrissage (608).

## Description

### DOMAINE TECHNIQUE

La présente invention concerne un procédé et un système de gestion de l'énergie d'une source d'énergie électrique, telle qu'une batterie, dans un aéronef présentant une architecture de propulsion hybride électrique.

### ETAT DE LA TECHNIQUE ANTERIEURE

La présente invention s'applique aux aéronefs présentant une architecture de propulsion hybride électrique, comprenant au moins un moteur thermique utilisant une combustion de carburant et une source d'énergie électrique configurée pour assister électriquement le moteur thermique. En d'autres termes, il s'agit d'une architecture d'alimentation en puissance mécanique par énergie hybride, à savoir provenant à la fois de l'utilisation de carburant (dans le moteur thermique) et de la source d'énergie, dans laquelle une assistance électrique est apportée au moteur thermique.

La source d'énergie électrique (batterie par exemple) permet ainsi notamment d'apporter un surplus d'énergie au moteur thermique pour des opérations nécessitant une grande puissance (telles que le démarrage, le décollage ou l'atterrissage, une accélération moteur, une montée/descente en altitude, l'arrêt du moteur...) et d'éviter de surdimensionner le moteur thermique pour de courtes phases opérationnelles ou situations d'urgence.

Dans la présente description, « source d'énergie électrique » est un terme générique pour désigner tout type de batterie, supercondensateur ou autre source de stockage d'énergie électrique, ainsi que toute combinaison de sources de même type ou de types différents (parmi ceux précités).

Une telle architecture de propulsion hybride électrique conduit à une réduction de consommation de carburant et de l'empreinte carbone.

La présente invention a pour but d'optimiser l'utilisation de la source d'énergie électrique (batterie par exemple) et d'éviter de la décharger complètement avant la fin d'une mission ou dans une proportion telle que des besoins en sécurité nécessitant une alimentation par ladite source d'énergie électrique ne puissent plus être assurés.

### EXPOSE DE L'INVENTION

Il est proposé un procédé de gestion de l'énergie d'une source d'énergie électrique dans un aéronef comportant un système de gestion de l'énergie de ladite source d'énergie électrique dans une architecture de propulsion hybride électrique comprenant au moins un moteur thermique utilisant une combustion de carburant et ladite source d'énergie électrique, le système de gestion de l'énergie comprenant une circuiterie électronique, le procédé étant implémenté par le système de gestion de l'énergie et comportant, pour une mission donnée de l'aéronef :
- pendant une phase de parcage au lieu d'embarquement, commander une charge complète de la source d'énergie électrique avec une quantité d'énergie répartie, d'une manière déterminée et pour toute la durée de la mission donnée, entre les réserves d'énergie suivantes :
   * une première réserve, qui est une marge de sécurité de conception conçue pour empêcher la source en énergie électrique de dépasser ses limites opérationnelles définies ;
   * une deuxième réserve, qui garantit une alimentation continue de systèmes essentiels de l'aéronef en cas d'extinction dudit au moins un moteur ;
   * une troisième réserve, qui garantit un rallumage en vol dudit au moins un moteur ;
      et
   * une quatrième réserve, prévue pour des fonctions hybrides apportant, par injection de puissance, une assistance électrique audit au moins un moteur en fonctionnement normal ;
- autoriser une utilisation de la quatrième réserve pour l'exécution d'au moins une des fonctions hybrides, pendant au moins une des phases suivantes : roulage avant décollage et décollage ; et
- commander une recharge de la source d'énergie électrique pendant une phase de croisière, avec une quantité d'énergie suffisante pour que la quatrième réserve soit au moins partiellement reconstituée et permette l'exécution d'au moins une des fonctions hybrides pendant au moins une des phases suivantes : descente, atterrissage et roulage après atterrissage.

Ainsi, pour une mission donnée de l'aéronef, la solution proposée permet d'optimiser le recours à l'assistance électrique tout en garantissant l'exécution des fonctions de sécurité jusqu'à la fin de cette mission. Il est à noter qu'au début de la mission, pendant la phase de parcage au lieu d'embarquement, la source d'énergie électrique est chargée entièrement, avec une quantité d'énergie qui est répartie entre les différentes réserves d'énergie, d'une manière déterminée et pour toute la durée de la mission donnée. Ainsi, par rapport à une solution classique de gestion de l'énergie par segments de mission (solution consistant à diviser la mission en segments de mission disposant chacun, au sein de la source d'énergie électrique, d'un budget d'énergie électrique prédéfini), la solution proposée propose un changement fondamental, avec une stratégie plus globale (gestion de l'énergie de manière globale sur l'ensemble de la mission) pour maximiser l'efficacité de l'assistance électrique. La solution classique précitée se justifiait par le grand nombre et la diversité des fonctions nécessitant de l'énergie. La solution proposée est adaptée aux nouvelles architectures (de propulsion hybride électriques) présentant un champ fonctionnel réduit et dans lesquelles le dimensionnement de la source d'énergie électrique (batterie par exemple) a été optimisé.

Selon un mode de réalisation particulier, le procédé comporte, pour la mission donnée et si la phase de roulage avant décollage est de durée supérieure à une durée prédéterminée : commander une recharge de la source d'énergie électrique pendant la phase de roulage avant décollage, avec une quantité d'énergie suffisante pour que la quatrième réserve soit au moins partiellement reconstituée et permette l'exécution d'au moins une des fonctions hybrides pendant la phase de décollage.

Selon un mode de réalisation particulier, le procédé comporte :
- autoriser une utilisation d'au moins une des deuxième et troisième réserves pour l'exécution d'au moins une des fonctions hybrides, pendant au moins une des phases de roulage avant décollage et de décollage ; et
- commander une recharge de la source d'énergie électrique pendant une phase de montée, avec une quantité d'énergie suffisante pour que les deuxième et troisième réserves soient entièrement reconstituées avant la phase de croisière.

Selon un mode de réalisation particulier, pendant la phase de montée, la recharge de la source d'énergie électrique est configurée pour être progressive et telle que chacune des deuxième et troisième réserves est toujours reconstituée dans une proportion au moins égale à un premier seuil déterminé, variable et croissant au fur et à mesure d'une augmentation d'altitude de l'aéronef.

Selon un mode de réalisation particulier, le procédé comporte :
- autoriser une utilisation d'au moins une des deuxième et troisième réserves, pour l'exécution d'au moins une des fonctions hybrides, pendant au moins une des phases de descente, d'atterrissage et de roulage après atterrissage.

Selon un mode de réalisation particulier, l'autorisation d'utilisation d'au moins une des deuxième et troisième réserves, pour l'exécution d'au moins une des fonctions hybrides pendant au moins une des phases de descente, d'atterrissage et de roulage après atterrissage, est configurée pour être progressive et telle que chacune des deuxième et troisième réserves contient encore de l'énergie dans une proportion au moins égale à un deuxième seuil déterminé, variable et décroissant au fur et à mesure d'une baisse d'altitude de l'aéronef.

Selon un mode de réalisation particulier, la recharge de la source d'énergie électrique pendant la phase de croisière est limitée et tient compte de l'autorisation d'utilisation d'au moins une des deuxième et troisième réserves pour l'exécution d'au moins une des fonctions hybrides pendant au moins une des phases de descente, d'atterrissage et de roulage après atterrissage.

Selon un mode de réalisation particulier, la recharge de la source d'énergie électrique pendant la phase de croisière est complète, de sorte qu'à l'issue de ladite recharge complète, la quatrième réserve est entièrement reconstituée et autorise l'exécution de toutes les fonctions hybrides devant être exécutées pendant les phases de descente, d'atterrissage et de roulage après atterrissage.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

Il est aussi proposé un système de gestion de l'énergie d'une source d'énergie électrique dans un aéronef comportant une architecture de propulsion hybride électrique comprenant au moins un moteur thermique utilisant une combustion de carburant et ladite source d'énergie électrique, le système de gestion de l'énergie étant embarqué dans l'aéronef et comportant une circuiterie électronique configurée pour implémenter, pour une mission donnée de l'aéronef :
- pendant une phase de parcage au lieu d'embarquement, commander une charge complète de la source d'énergie électrique avec une quantité d'énergie répartie, d'une manière déterminée et pour toute la durée de la mission donnée, entre les réserves d'énergie suivantes :
   * une première réserve, qui est une marge de sécurité de conception conçue pour empêcher la source en énergie électrique de dépasser ses limites opérationnelles définies ;
   * une deuxième réserve, qui garantit une alimentation continue de systèmes essentiels de l'aéronef en cas d'extinction dudit au moins un moteur ;
   * une troisième réserve, qui garantit un rallumage en vol dudit au moins un moteur ;
      et
   * une quatrième réserve, prévue pour des fonctions hybrides apportant, par injection de puissance, une assistance électrique audit au moins un moteur en fonctionnement normal ;
- autoriser une utilisation de la quatrième réserve pour l'exécution d'au moins une des fonctions hybrides, pendant au moins une des phases suivantes : roulage avant décollage et décollage ; et
- commander une recharge de la source d'énergie électrique pendant une phase de croisière, avec une quantité d'énergie suffisante pour que la quatrième réserve soit au moins partiellement reconstituée et permette l'exécution d'au moins une des fonctions hybrides pendant au moins une des phases suivantes : descente, atterrissage et roulage après atterrissage.

Plus généralement, il est proposé un système de gestion de l'énergie, configuré pour exécuter le procédé évoqué ci-dessus, selon l'un quelconque de ses modes de réalisation.

Il est aussi proposé un aéronef comprenant un système de gestion de l'énergie, tel qu'évoqué ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] est une vue simplifiée de dessus d'un aéronef muni d'un système de gestion de l'énergie selon la présente invention ;
[Fig. 2] illustre, sous forme de schéma-bloc, l'aéronef de la Fig. 1 muni du système de gestion de l'énergie, dans un mode de réalisation particulier de la présente invention ;
[Fig. 3] illustre schématiquement un exemple d'architecture matérielle du système de gestion de l'énergie de la Fig. 1 ;
[Fig. 4] illustre schématiquement la répartition de la charge initiale de la batterie sur quatre réserves d'énergie ;
[Fig. 5] illustre schématiquement un algorithme de gestion de l'énergie, exécuté par le système de gestion de l'énergie de la Fig. 1, dans un premier mode de réalisation ;
[Fig. 6] illustre schématiquement les différents états de charge de la batterie au cours de différentes phases d'une mission donnée, lors de l'exécution de l'algorithme de la Fig. 5 ;
[Fig. 7] illustre schématiquement un algorithme de gestion de l'énergie, exécuté par le système de gestion de l'énergie de la Fig. 1, dans un deuxième mode de réalisation ;
[Fig. 8] illustre schématiquement les différents états de charge de la batterie au cours de différentes phases d'une mission donnée, lors de l'exécution de l'algorithme de la Fig. 7 ; et
[Fig. 9] illustre schématiquement un algorithme de gestion de l'énergie, exécuté par le système de gestion de l'énergie de la Fig. 1, dans un troisième mode de réalisation.

### EXPOSE DETAILLE DE MODES DE REALISATION

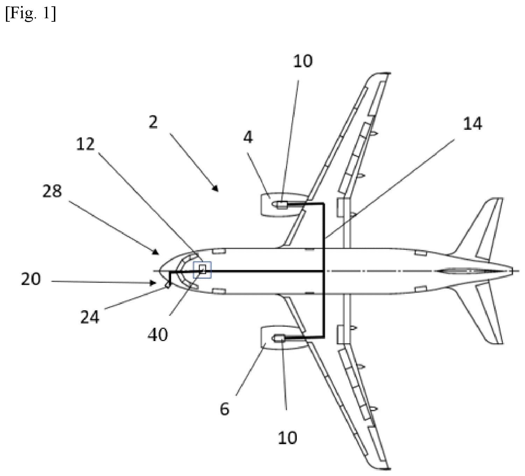

Comme représenté sur la **Fig. 1****,** la présente invention se rapporte à un aéronef 2 pourvu d'une architecture de propulsion hybride électrique à savoir, comme indiqué plus haut, dont le(s) moteur(s) thermique(s) peu(ven)t être assisté(s) électriquement. Dans une telle architecture, l'énergie électrique peut également être utilisée pour les besoins de l'aéronef, comme par exemple ceux des équipements de l'aéronef et plus spécifiquement par exemple la gestion de l'air de la cabine (ou ECS pour « Environmental Control System » en anglais).

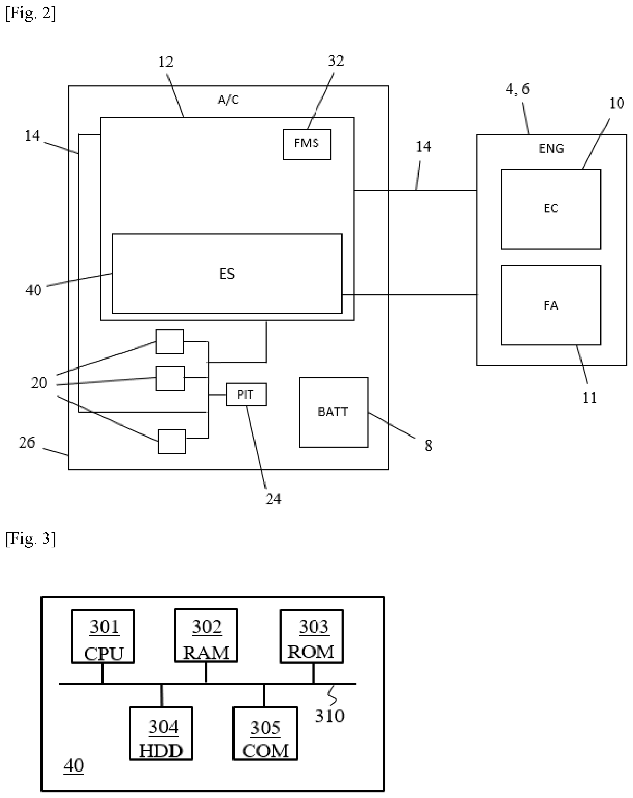

L'aéronef comporte au moins deux moteurs thermiques 4, 6 (aussi référencés ENG sur la Fig. 2) ainsi qu'une source d'énergie électrique (par exemple une batterie, référencée BATT 8 sur la Fig. 2). Chaque moteur thermique 4, 6 peut être par exemple de type turboréacteur (par exemple un turboréacteur à double flux, ou « turbofan » en anglais) ou encore de type moteur à soufflante non carénée. Chaque moteur 4, 6 comprend un calculateur moteur 10 (aussi référencé EC sur la Fig. 2) et un module d'activation (référencé 11 et FA sur la Fig. 2). Le module d'activation 11 (FA) peut être intégré au calculateur moteur 10 (EC) ou être indépendant comme illustré sur la Fig. 2. Les calculateurs moteur 10 des deux moteurs 4, 6 sont connectés à un système avionique 12, encore appelé cœur avionique, au moyen d'un réseau 14 de communication. Le réseau 14 de communication lie également le système avionique 12 à des composants 20 de l'aéronef qui lui transmettent des paramètres de l'aéronef. Les composants 20 sont tous les éléments, équipements et autres pièces nécessaires à l'exécution de fonctions susceptibles d'être utilisées par les moteurs 4, 6, et permettant une assistance par la batterie 8 (exemples de fonctions : l'assistance au démarrage moteur (actionnement du démarreur), l'assistance à l'accélération moteur (lorsque l'aéronef souhaite accélérer au sol ou en vol), l'assistance à l'arrêt des moteurs, la fonction ralenti, le refroidissement moteur, etc.). Sur la Fig. 1, l'un des composants, une sonde Pitot 24 (aussi référencée PIT), permettant de mesurer le paramètre de la vitesse de l'aéronef, est représentée en exemple de composant 20 de l'aéronef 2.

Comme illustré sur la **Fig. 2****,** de manière schématisée et simplifiée, l'aéronef 2 comporte d'un côté une partie aéronef 26 dans sa globalité (sans les moteurs 4, 6) et de l'autre les moteurs 4, 6. La partie aéronef 26 (aussi référencée A/C) permet de contrôler l'aéronef pour effectuer son vol et elle est connectée aux moteurs 4, 6 (ENG), ces derniers permettant d'assurer la propulsion de l'aéronef. L'ensemble des systèmes représentés dans la partie aéronef 26 (A/C) peuvent être localisés à différents endroits possibles de l'aéronef : c'est la raison pour laquelle ils ne sont pas représentés sur la Fig. 1. Le système avionique 12, de manière conventionnelle, se trouve localisé essentiellement dans le cockpit (référencé 28 sur la Fig. 1) et/ou proche de celui-ci (ce que schématise la Fig. 1), mais il pourrait en être autrement au moins pour une partie du système.

Comme déjà mentionné plus haut, l'expression générique « source d'énergie électrique » est utilisée pour désigner tout type de batterie, supercondensateur ou autre source de stockage d'énergie, ainsi que toute combinaison de sources de même type ou de types différents (parmi ceux précités). La source est, dans la forme de réalisation illustrée et comme indiqué plus haut, une batterie 8 et par exemple une batterie de type Lithium et plus précisément Lithium-ion ou selon un autre exemple une batterie LFP (lithium-fer-phosphate). Dans toute la suite de la description, on va se référer à la charge de la batterie 8, mais si la source d'énergie électrique est d'un autre type qu'une batterie, la charge correspond à la quantité d'énergie électrique restante susceptible d'être délivrée par la source.

La partie aéronef 26 (A/C) comprend de nombreux modules de type connu, tels que le module de gestion du vol 32 (ou FMS pour « Flight Management System » en anglais). Le système avionique 12 du cockpit 28 est connecté à des composants 20 par le réseau 14, ainsi qu'aux moteurs 4, 6 (ENG).

L'aéronef 2, et plus précisément le système avionique 12 dans le mode de réalisation illustré sur les Figs. 1 et 2, comprend un système 40 de gestion de la batterie 8 (aussi appelé « système de gestion de l'énergie de la source d'énergie électrique »). Le système 40 de gestion de la batterie 8 est connecté aux moteurs 4, 6 Eng. Dans un mode de réalisation, il comprend un module de gestion de l'énergie EM connecté à un module de contrôle MC lui-même connecté aux moteurs 4, 6. Les modules EM et MC (non représentés sur la Fig. 2) peuvent se présenter sous la forme d'un unique calculateur (voir Fig. 3) ou de deux calculateurs (ce(s) calculateur(s) pouvant être indépendant(s) ou intégré(s) à un ou plusieurs calculateurs existants. Le système 40 de gestion de la batterie 8 est lié à la batterie 8 ainsi qu'au réseau 14 de communication, lui permettant une connexion avec l'ensemble précité de composants 20 de l'aéronef.

La **Fig. 3** illustre schématiquement un exemple d'architecture matérielle du système 40 de gestion de la batterie 8, qui comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface de communication 305 permettant au système 40 de gestion de la batterie 8 d'interagir dans l'avionique de l'aéronef.

Le processeur 301 est capable d'exécuter des instructions qui forment un programme d'ordinateur et qui sont chargées dans la RAM 302 à partir de la ROM 303, d'une mémoire externe (non représentée), d'un autre support de stockage (tel qu'une carte SD), ou d'un réseau de communication (non représenté). Lorsque le système 40 de gestion de la batterie 8 est mis sous tension, le processeur 301 est capable de lire de la RAM 302 les instructions précitées et de les exécuter. Quand elles sont lues (depuis la RAM 302 ou un support de stockage) et exécutées par le processeur 301, ces instructions (qui forment un programme d'ordinateur) entraînent l'exécution, par le processeur 301, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système 40 de gestion de la batterie comprend de la circuiterie électronique agencée et configurée pour implémenter les comportements, étapes et algorithmes décrits ici.

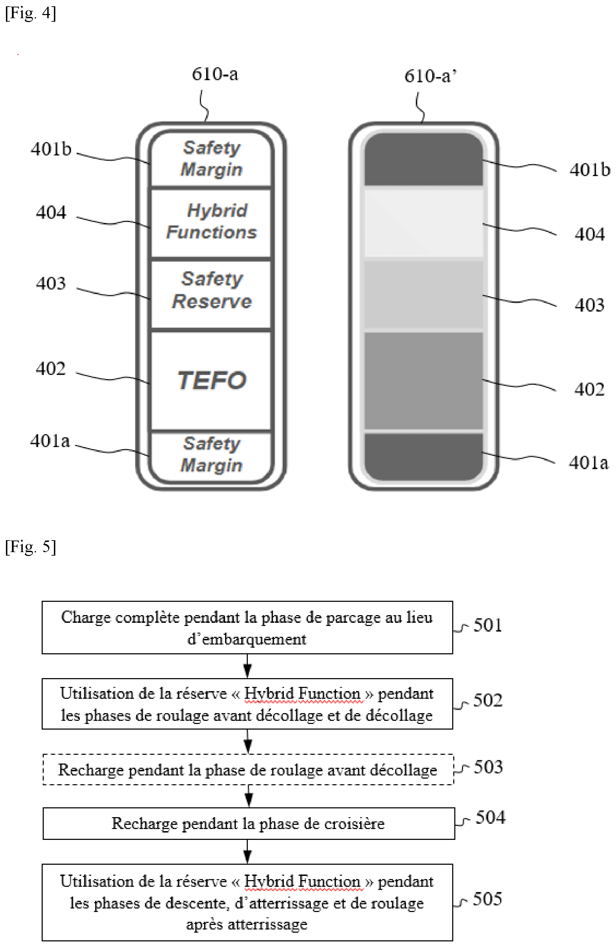

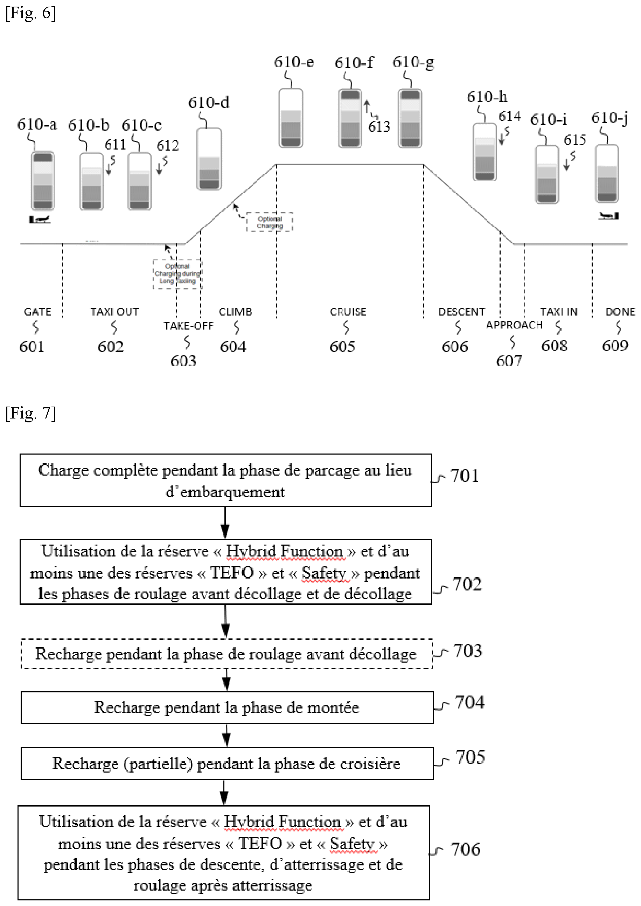

La **Fig. 5** illustre schématiquement un algorithme de gestion de l'énergie, exécuté par le système 40 de gestion de la batterie 8, pour une mission donnée de l'aéronef 2, dans un premier mode de réalisation comprenant des étapes 501 à 505. Elle est décrite conjointement avec la **Fig. 6** qui illustre schématiquement les différents états de charge de la batterie 8 au cours de différentes phases d'une mission donnée, lors de l'exécution de l'algorithme de la Fig. 5.

Dans l'étape 501, pendant une phase de parcage au lieu d'embarquement (référencée 601 sur la Fig. 6 et appelée « Gate » en anglais), le système 40 commande une charge complète de la batterie 8 avec une quantité d'énergie répartie, d'une manière déterminée et pour toute la durée de la mission donnée, entre quatre réserves d'énergie. L'état de charge de la batterie 8 à l'issue de cette étape 501 est référencé 610-a sur la Fig. 6.

La **Fig. 4** illustre schématiquement cette répartition de la charge initiale de la batterie 8, c'est-à-dire de l'état de charge 610-a, sur les quatre réserves d'énergie suivantes :
- une première réserve, référencée 401a et 401b (et appelée par exemple « Design Safety Margin Reserve » en anglais), qui est une marge de sécurité de conception conçue pour empêcher la batterie 8 de dépasser ses limites opérationnelles définies ;
- une deuxième réserve, référencée 402 (et appelée par exemple « TEFO Reserve » en anglais), qui garantit une alimentation continue de systèmes essentiels de l'aéronef en cas d'extinction des moteurs 4, 6 (ou TEFO pour « Total Engine Flame Out » en anglais) ;
- une troisième réserve, référencée 403 (et appelée par exemple « Safety Reserve » en anglais), qui garantit un rallumage en vol des moteurs 4, 6 (ou « In-flight engine relight » en anglais) ; et
- une quatrième réserve, référencée 404 (et appelée par exemple « Hybrid Function Reserve » en anglais), prévue pour des fonctions hybrides apportant, par injection de puissance, une assistance électrique aux moteur 4, 6 en fonctionnement normal.

La partie droite de la Fig. 4 est une représentation 610-a' par niveaux de gris de l'état de charge 610-a précité. On y retrouve donc les quatre réserves d'énergie 401a/401b, 402, 403 et 404.

De retour à la Fig. 5, dans l'étape 502, le système 40 autorise une utilisation de la quatrième réserve 404 (« Hybrid Function Reserve ») pour l'exécution d'une ou plusieurs des fonctions hybrides, pendant la phase roulage avant décollage (référencée 602 sur la Fig. 6 et appelée « Taxi out » en anglais) et/ou pendant la phase de décollage (référencée 603 sur la Fig. 6 et appelée « Take-off » en anglais). Sur la Fig. 6, on a représenté deux états successifs, référencés 610-b et 610-c, de l'état de charge de la batterie 8 au cours de cette étape 502. L'utilisation de la quatrième réserve 404, pour l'exécution d'une ou plusieurs des fonctions hybrides, y est symbolisée par les flèches référencées 611 et 612.

Dans l'étape 503 (optionnelle), si la phase 602 de roulage avant décollage est de durée supérieure à une durée prédéterminée, le système 40 commande une recharge de la batterie 8 pendant la phase 602 de roulage avant décollage, avec une quantité d'énergie suffisante pour que la quatrième réserve 404 soit au moins partiellement reconstituée et permette l'exécution d'une ou plusieurs des fonctions hybrides pendant la phase 603 de décollage.

Pendant la phase de montée (référencée 604 sur la Fig. 6 et appelée « Climb » en anglais), l'énergie restante (c'est-à-dire la deuxième réserve 402 (« TEFO Reserve »), la troisième réserve 403 (« Safety Reserve ») et la partie référencée 401a de la première réserve) est réservée aux scénarios critiques pour la sécurité, tels que l'extinction totale des moteurs 4, 6 (« TEFO ») et le redémarrage en vol des moteurs 4, 6. Cette énergie restante apparaît sur l'état de charge de la batterie 8 référencé 610-d sur la Fig. 6. La charge de la batterie 8 est facultative (possible mais non obligatoire) pendant cette phase de montée 604.

Dans l'étape 504, le système 40 commande une recharge de la batterie pendant une phase de croisière (référencée 605 sur la Fig. 6 et appelée « Cruise » en anglais), avec une quantité d'énergie suffisante pour que la quatrième réserve 404 soit au moins partiellement reconstituée en vue de l'exécution d'une étape 505. Sur la Fig. 6, on a représenté trois états successifs, référencés 610-e, 610-f et 610-g, de l'état de charge de la batterie 8 au cours de cette étape 504. L'état 610-e est identique à l'état 610-d (on se place donc dans le cas où la batterie 8 n'a pas été rechargée pendant la phase de montée 604). La recharge de la batterie apparaît sur l'état 610-f, où elle est symbolisée par la flèche référencée 613. L'état 610-g montre une batterie entièrement chargée (comme dans l'état initial 610-a).

Dans l'étape 505, le système 40 autorise une utilisation de la quatrième réserve 404 pour l'exécution d'une ou plusieurs des fonctions hybrides pendant la phase de descente (référencée 606 sur la Fig. 6 et appelée « Descent » en anglais) et/ou pendant la phase d'atterrissage (référencée 607 sur la Fig. 6 et appelée « Approach » en anglais) et/ou pendant la phase de roulage après atterrissage (référencée 608 sur la Fig. 6 et appelée « Taxi in » en anglais). Sur la Fig. 6, on a représenté deux états successifs, référencés 610-h et 610-i, de l'état de charge de la batterie 8 au cours de cette étape 505. L'utilisation de la quatrième réserve 404, pour l'exécution d'une ou plusieurs des fonctions hybrides, y est symbolisée par les flèches référencées 614 et 615. Dans l'exemple illustré sur la Fig. 6, à l'issue de la phase 608 de roulage après atterrissage (et donc au début de la phase suivante de parcage au lieu d'embarquement (référencée 609 sur la Fig. 6 et appelée « Done » en anglais), l'état de charge de la batterie 8 est référencé 610-j et montre que la quatrième réserve 404 a été consommée.

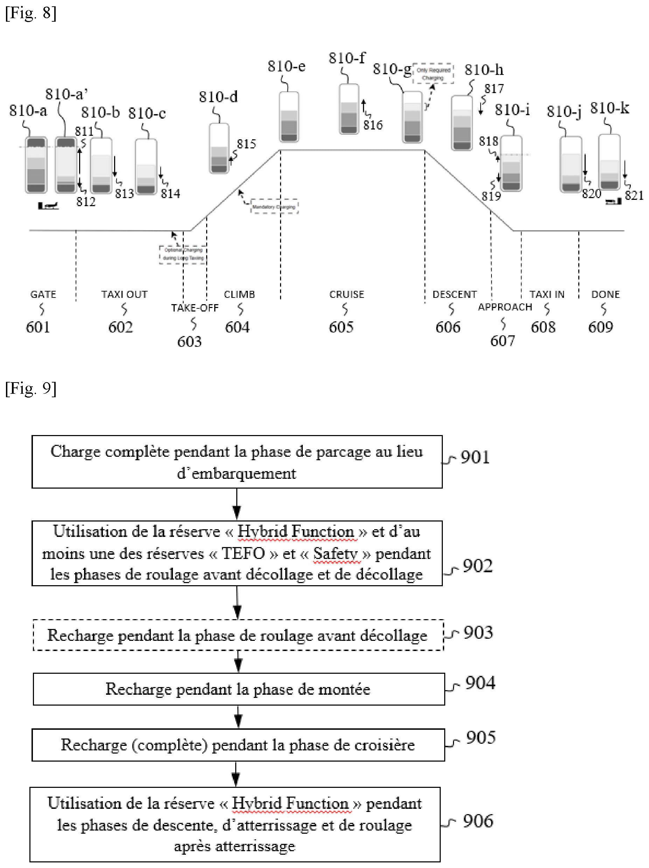

La **Fig. 7** illustre schématiquement un algorithme de gestion de l'énergie, exécuté par le système 40 de gestion de la batterie 8, pour une mission donnée de l'aéronef 2, dans un deuxième mode de réalisation comprenant des étapes 701 à 706. Elle est décrite conjointement avec la **Fig. 8** qui illustre schématiquement les différents états de charge de la batterie 8 au cours de différentes phases d'une mission donnée, lors de l'exécution de l'algorithme de la Fig. 7. Sur la Fig. 8, les phases de la mission sont identiques à celles représentées sur la Fig. 6 et référencées de la même manière, 601 à 609.

L'étape 701 est identique à l'étape 501 de la Fig. 5 (pendant la phase 601 de parcage au lieu d'embarquement, le système 40 commande une charge complète de la batterie 8). L'état de charge de la batterie 8 à l'issue de l'étape 701 est référencé 810-a sur la Fig. 8.

Dans l'étape 702, le système 40 autorise une utilisation de la quatrième réserve 404 (comme dans l'étape 502 de la Fig. 5) et aussi d'au moins une des deuxième et troisième réserves, 402 (« TEFO Reserve ») et 403 (« Safety Reserve »), pour l'exécution d'une ou plusieurs des fonctions hybrides, pendant la phase 602 de roulage avant décollage et/ou pendant la phase 603 de décollage. Ainsi, on augmente la quantité d'énergie électrique disponible pour exécuter des fonctions hybrides pendant les opérations au sol (phases 602 et 603), en tirant profit du fait que pendant les opérations au sol les deuxième et troisième réserves 402, 403 ne sont pas requises. Sur la Fig. 8, on a représenté deux états successifs, référencés 810-b et 810-c, de l'état de charge de la batterie 8 au cours de cette étape 702. L'utilisation de la quatrième réserve 404 et d'au moins une des deuxième et troisième réserves 402, 403, pour l'exécution d'une ou plusieurs des fonctions hybrides, y est symbolisée par les flèches référencées 813 et 814. Ainsi, et comme illustré par l'état de charge (virtuel et temporaire) référencé 810-a', le fait d'autoriser l'utilisation d'au moins une des deuxième et troisième réserves, 402 (« TEFO Reserve ») et 403 (« Safety Reserve »), en plus de la quatrième réserve 404 (« Hybrid Function Reserve ») pendant l'étape 702, revient virtuellement (et temporairement) à réduire la taille de la deuxième réserve 402 et/ou la taille de la troisième réserve 403, et augmenter celle de la quatrième réserve 404 (comme symbolisé par les flèches référencées 812 et 811 respectivement).

L'étape 703 est identique à l'étape 503 de la Fig. 5. Pour mémoire, il s'agit d'une étape optionnelle dans laquelle, si la phase 602 de roulage avant décollage est de durée supérieure à une durée prédéterminée, le système 40 commande une recharge de la batterie 8 pendant cette phase 602, avec une quantité d'énergie suffisante pour que la quatrième réserve 404 soit au moins partiellement reconstituée et permette l'exécution d'une ou plusieurs des fonctions hybrides pendant la phase 603 de décollage.

Dans l'étape 704 (qui n'a pas d'équivalent dans l'algorithme de la Fig. 5), le système 40 commande une recharge de la batterie pendant la phase de montée 604, avec une quantité d'énergie suffisante pour que les deuxième et troisième réserves 402, 403 soient entièrement reconstituées avant la phase de croisière 605. Sur l'état de charge de la batterie 8 référencé 810-d, cette recharge est symbolisée par la flèche référencée 815.

Dans une implémentation particulière de l'étape 704, pendant la phase de montée 604, la recharge de la batterie 8 est configurée pour être progressive et telle que chacune des deuxième et troisième réserves 402, 403 est toujours reconstituée dans une proportion au moins égale à un premier seuil déterminé (qui peut être différent pour chacune des deuxième et troisième réserves), variable et croissant au fur et à mesure d'une augmentation d'altitude de l'aéronef. Ainsi, on optimise encore le rechargement de la batterie 8. Par exemple, pour la troisième réserve 403 (qui garantit un rallumage en vol des moteurs 4, 6), le premier seuil S1 est l'équivalent de : une tentative (d'un nombre déterminé de secondes) pour une altitude inférieure ou égale à une première valeur V1 ; deux tentatives pour une altitude supérieure à la première valeur V1 et inférieure ou égale à une deuxième valeur V2, avec V2 > V1 ; et trois tentatives pour une altitude supérieure à la deuxième valeur V2 et inférieure ou égale à une troisième valeur V3 (altitude de croisière), avec V3 > V2. De même, pour la deuxième réserve 402 (qui garantit une alimentation continue de systèmes essentiels de l'aéronef en cas d'extinction des moteurs 4, 6), le premier seuil S1' est par exemple l'équivalent de : une première durée D1 d'alimentation continue des systèmes essentiels de l'aéronef pour une altitude inférieure ou égale à la première valeur V1 ; : une deuxième durée D2 (avec D2 > D1) d'alimentation continue des systèmes essentiels pour une altitude supérieure à la première valeur V1 et inférieure ou égale à la deuxième valeur V2, avec V2 > V1 ; et une troisième durée D3 (avec D3 > D2) d'alimentation continue des systèmes essentiels pour une altitude supérieure à la deuxième valeur V2 et inférieure ou égale à la troisième valeur V3 (altitude de croisière), avec V3 > V2.

Dans l'étape 705, le système 40 commande une recharge partielle de la batterie pendant la phase de croisière 605, avec une quantité d'énergie limitée et suffisante pour que la quatrième réserve 404 soit partiellement reconstituée et permette, en combinaison (cumul de réserves) avec la deuxième réserve 402 et/ou la troisième réserve 403, l'exécution de l'étape 706. En d'autres termes, la recharge de la batterie 8 pendant la phase de croisière 605 est limitée et tient compte de l'autorisation, dans l'étape suivante 706, d'utilisation d'au moins une des deuxième et troisième réserves 402, 403 pour l'exécution d'au moins une des fonctions hybrides pendant au moins une des phases de descente 606, d'atterrissage 607 et de roulage après atterrissage 608. Le fait que la recharge de la batterie 8 pendant la phase de croisière 605 soit limitée permet de réduire les opérations de recharge pendant le vol. Dans ce cas, on privilégie une recharge complète ultérieure au sol, à l'arrivée. Sur la Fig. 8, on a représenté trois états successifs, référencés 810-e, 810-f et 810-g, de l'état de charge de la batterie 8 au cours de cette étape 705. L'état 810-e est identique à l'état 810-d (la batterie 8 a été partiellement rechargée pendant la phase de montée 604). La recharge de la batterie pendant la phase de croisière 605 apparaît sur l'état 810-f, où elle est symbolisée par la flèche référencée 816. L'état 810-g montre une batterie partiellement chargée (et non pas complètement comme dans l'état initial 810-a) du fait que, comme expliqué plus haut, la quatrième réserve 404 et au moins une des deuxième et troisième réserves 402, 403 peuvent être utilisées pendant l'étape 706.

Dans l'étape 706, le système 40 autorise une utilisation de la quatrième réserve 404 et d'au moins une des deuxième et troisième réserves 402, 403 pour l'exécution d'une ou plusieurs des fonctions hybrides, pendant la phase de descente 606 et/ou pendant la phase d'atterrissage 607 et/ou pendant la phase de roulage après atterrissage 608. Ainsi, on augmente la quantité d'énergie électrique disponible pour exécuter des fonctions hybrides pendant les phases 606 et 608, en tirant profit du fait que pendant ces phases les deuxième et troisième réserves 402, 403 ne sont pas requises en totalité. Sur la Fig. 8, on a représenté deux états successifs, référencés 810-h et 810-j, de l'état de charge de la batterie 8 au cours de cette étape 706. L'utilisation de la quatrième réserve 404 et d'au moins une des deuxième et troisième réserves 402, 403, pour l'exécution d'une ou plusieurs des fonctions hybrides, y est symbolisée par les flèches référencées 817 et 820 Entre ces deux états 810-h et 810-j, on a représenté un état de charge (virtuel) 810-i, illustrant le fait qu'autoriser l'utilisation d'au moins une des deuxième et troisième réserves 402, 403 en plus de la quatrième réserve 404 pendant l'étape 706, revient virtuellement (et temporairement) à réduire la taille de la deuxième réserve 402 et/ou de la troisième réserve 403 et augmenter celle de la quatrième réserve 404 (comme symbolisé par les flèches référencées 819 et 818 respectivement). Dans l'exemple illustré sur la Fig. 8, à l'issue de la phase 608 de roulage après atterrissage (et donc au début de la phase suivante 609 de parcage au lieu d'embarquement), l'état de charge de la batterie 8 est référencé 810-k et montre qu'une partie du cumul des deuxième, troisième et quatrième réserves 402, 403, 404 a été consommée (comme symbolisé par la flèche référencée 821).

Dans une implémentation particulière de l'étape 706, l'autorisation d'utilisation d'au moins une des deuxième et troisième réserves 402, 403 est configurée pour être progressive et telle que chacune des deuxième et troisième réserves 402, 403 contient encore de l'énergie dans une proportion au moins égale à un deuxième seuil déterminé (qui peut être différent pour chacune des deuxième et troisième réserves), variable et décroissant au fur et à mesure d'une baisse d'altitude de l'aéronef. Ainsi, on optimise encore l'utilisation de la batterie 8. Par exemple, pour la troisième réserve 403, le deuxième seuil est identique au premier seuil S1 défini plus haut (pour l'implémentation particulière de l'étape 704) ; et pour la deuxième réserve 402, le deuxième seuil est par exemple identique au premier seuil S1' (également défini plus haut pour l'implémentation particulière de l'étape 704).

La **Fig. 9** illustre schématiquement un algorithme de gestion de l'énergie, exécuté par le système de gestion de la batterie 8, dans un troisième mode de réalisation comprenant des étapes 901 à 906.

Les étapes 901 à 904 sont identiques aux étapes 701 à 704 de la Fig. 5.

L'étape 905 se distingue de l'étape 705 de la Fig. 5 en ce que le système 40 commande une recharge complète (et non pas partielle) de la batterie 8 pendant la phase de croisière 605. Ainsi, à l'issue de cette recharge complète, la quatrième réserve 404 est entièrement reconstituée et autorise, dans l'étape suivante 906, l'exécution de toutes les fonctions hybrides devant être exécutées pendant les phases de descente 606, d'atterrissage 607 et de roulage après atterrissage 608. Le fait que la recharge de la batterie 8 pendant la phase de croisière 605 soit complète permet de réduire les opérations de recharge au sol, à l'arrivée, et donc également de réduire le temps de rotation de l'aéronef (ou TAT pour « Turn Around Time » en anglais). L'étape 906 se distingue de l'étape 706 de la Fig. 5 en ce que le système 40 autorise une utilisation uniquement de la quatrième réserve 404 (et pas d'au moins une des deuxième et troisième réserves 402, 403) pour l'exécution d'une ou plusieurs des fonctions hybrides, pendant la phase de descente 606 et/ou pendant la phase d'atterrissage 607 et/ou pendant la phase de roulage après atterrissage 608. En effet, l'utilisation d'au moins une des deuxième et troisième réserves 402, 403 n'est ici pas nécessaire puisque la batterie 8 (et donc la quatrième réserve 404) a été entièrement rechargée pendant la phase de croisière 605.

## Revendications

1. Procédé de gestion de l'énergie d'une source d'énergie électrique (8) dans un aéronef (2) comportant un système (40) de gestion de l'énergie de ladite source d'énergie électrique dans une architecture de propulsion hybride électrique comprenant au moins un moteur thermique (4, 6) utilisant une combustion de carburant et ladite source d'énergie électrique (8), le système de gestion de l'énergie comprenant une circuiterie électronique, le procédé étant implémenté par le système de gestion de l'énergie et comportant, pour une mission donnée de l'aéronef :
- pendant une phase de parcage au lieu d'embarquement (601), commander une charge (501, 701, 901) complète de la source d'énergie électrique avec une quantité d'énergie répartie, d'une manière déterminée et pour toute la durée de la mission donnée, entre les réserves d'énergie suivantes :
* une première réserve (401a, 401b), qui est une marge de sécurité de conception conçue pour empêcher la source en énergie électrique de dépasser ses limites opérationnelles définies ;
* une deuxième réserve (402), qui garantit une alimentation continue de systèmes essentiels de l'aéronef en cas d'extinction dudit au moins un moteur ;
* une troisième réserve (403), qui garantit un rallumage en vol dudit au moins un moteur ; et
* une quatrième réserve (404), prévue pour des fonctions hybrides apportant, par injection de puissance, une assistance électrique audit au moins un moteur en fonctionnement normal ;
- autoriser (502, 702, 902) une utilisation de la quatrième réserve (404) pour l'exécution d'au moins une des fonctions hybrides, pendant au moins une des phases suivantes : roulage avant décollage (602) et décollage (603) ; et
- commander une recharge (504, 705, 905) de la source d'énergie électrique pendant une phase de croisière (605), avec une quantité d'énergie suffisante pour que la quatrième réserve (404) soit au moins partiellement reconstituée et permette (505, 706, 906) l'exécution d'au moins une des fonctions hybrides pendant au moins une des phases suivantes : descente (606), atterrissage (607) et roulage après atterrissage (608).

2. Procédé selon la revendication 1, comportant, pour la mission donnée et si la phase de roulage avant décollage (602) est de durée supérieure à une durée prédéterminée :
- commander une recharge (503, 703, 903) de la source d'énergie électrique pendant la phase de roulage avant décollage (602), avec une quantité d'énergie suffisante pour que la quatrième réserve (404) soit au moins partiellement reconstituée et permette l'exécution d'au moins une des fonctions hybrides pendant la phase de décollage (603).

3. Procédé selon l'une quelconque des revendications 1 et 2, comportant :
- autoriser (702, 902) une utilisation d'au moins une des deuxième et troisième réserves (402, 403) pour l'exécution d'au moins une des fonctions hybrides, pendant au moins une des phases de roulage avant décollage (602) et de décollage (603) ; et
- commander une recharge (704, 904) de la source d'énergie électrique pendant une phase de montée (604), avec une quantité d'énergie suffisante pour que les deuxième et troisième réserves (402, 403) soient entièrement reconstituées avant la phase de croisière (605).

4. Procédé selon la revendication 3, dans lequel, pendant la phase de montée, la recharge de la source d'énergie électrique est configurée pour être progressive et telle que chacune des deuxième et troisième réserves est toujours reconstituée dans une proportion au moins égale à un premier seuil déterminé, variable et croissant au fur et à mesure d'une augmentation d'altitude de l'aéronef.

5. Procédé selon l'une quelconque des revendications 1 à 4, comportant :
- autoriser (706) une utilisation d'au moins une des deuxième et troisième réserves (402, 403) pour l'exécution d'au moins une des fonctions hybrides, pendant au moins une des phases de descente (606), d'atterrissage (607) et de roulage après atterrissage (608).

6. Procédé selon la revendication 5, dans lequel l'autorisation (706) d'utilisation d'au moins une des deuxième et troisième réserves (402, 403), pour l'exécution d'au moins une des fonctions hybrides pendant au moins une des phases de descente (606), d'atterrissage (607) et de roulage après atterrissage (608), est configurée pour être progressive et telle que chacune des deuxième et troisième réserves contient encore de l'énergie dans une proportion au moins égale à un deuxième seuil déterminé, variable et décroissant au fur et à mesure d'une baisse d'altitude de l'aéronef.

7. Procédé selon l'une quelconque des revendications 4 à 6, dans lequel la recharge (705) de la source d'énergie électrique pendant la phase de croisière (605) est limitée et tient compte de l'autorisation d'utilisation d'au moins une des deuxième et troisième réserves (402, 403) pour l'exécution d'au moins une des fonctions hybrides pendant au moins une des phases de descente (606), d'atterrissage (607) et de roulage après atterrissage (608).

8. Procédé selon la revendication 3, dans lequel la recharge (905) de la source d'énergie électrique pendant la phase de croisière (605) est complète, de sorte qu'à l'issue de ladite recharge complète, la quatrième réserve (404) est entièrement reconstituée et autorise l'exécution de toutes les fonctions hybrides devant être exécutées pendant les phases de descente (606), d'atterrissage (607) et de roulage après atterrissage (608).

9. Produit programme d'ordinateur, comportant des instructions entraînant l'exécution, par un processeur (301), du procédé selon l'une quelconque des revendications 1 à 8, lorsque lesdites instructions sont exécutées par le processeur.

10. Support de stockage, stockant un programme d'ordinateur comportant des instructions entraînant l'exécution, par un processeur (301), du procédé selon l'une quelconque des revendications 1 à 8, lorsque lesdites instructions sont lues depuis le support de stockage et exécutées par le processeur.

11. Système (40) de gestion de l'énergie d'une source d'énergie électrique (8) dans un aéronef comportant une architecture de propulsion hybride électrique comprenant au moins un moteur thermique (4, 6) utilisant une combustion de carburant et ladite source d'énergie électrique (8), le système de gestion de l'énergie étant embarqué dans l'aéronef et comportant une circuiterie électronique configurée pour implémenter, pour une mission donnée de l'aéronef :
- pendant une phase de parcage au lieu d'embarquement (601), commander une charge (501, 701, 901) complète de la source d'énergie électrique avec une quantité d'énergie répartie, d'une manière déterminée et pour toute la durée de la mission donnée, entre les réserves d'énergie suivantes :
* une première réserve (401a, 401b), qui est une marge de sécurité de conception conçue pour empêcher la source en énergie électrique de dépasser ses limites opérationnelles définies ;
* une deuxième réserve (402), qui garantit une alimentation continue de systèmes essentiels de l'aéronef en cas d'extinction dudit au moins un moteur ;
* une troisième réserve (403), qui garantit un rallumage en vol dudit au moins un moteur ; et
* une quatrième réserve (404), prévue pour des fonctions hybrides apportant, par injection de puissance, une assistance électrique audit au moins un moteur en fonctionnement normal ;
- autoriser (502, 702, 902) une utilisation de la quatrième réserve (404) pour l'exécution d'au moins une des fonctions hybrides, pendant au moins une des phases suivantes : roulage avant décollage (602) et décollage (603) ; et
- commander une recharge (504, 705, 905) de la source d'énergie électrique pendant une phase de croisière (605), avec une quantité d'énergie suffisante pour que la quatrième réserve (404) soit au moins partiellement reconstituée et permette l'exécution d'au moins une des fonctions hybrides pendant au moins une des phases suivantes : descente (606), atterrissage (607) et roulage après atterrissage (608).

12. Aéronef (2) comprenant un système (40) de gestion de l'énergie selon la revendication 11.
